# EUROPEAN PATENT SPECIFICATION

(11) **EP 3 357 139 B1**
(45) Date of publication and mention of the grant of the patent: **30.12.2020**
(21) Application number: 16794036.0
(22) Date of filing: 22.09.2016
(51) Int. Cl.: B60L 53/22, B60L 58/20, H02J 7/14

(54) **APPLIANCE FOR RECHARGING BATTERIES OF ELECTRIC VEHICLES OR THE LIKE**
EINRICHTUNG ZUM AUFLADEN VON BATTERIEN VON ELEKTROFAHRZEUGEN ODER DERGLEICHEN
APPAREIL PERMETTANT DE RECHARGER DES BATTERIES DE VÉHICULES ÉLECTRIQUES OU ANALOGUE

(30) Priority: 28.09.2015 IT UB20153932
(43) Date of publication of application: 08.08.2018
(73) Proprietor: Meta System S.p.A., 42124 Reggio Emilia (IT)
(72) Inventor: LASAGNI, Cesare, 42124 Reggio Emilia (RE) (IT); SIMONAZZI, Giuseppe, 42124 Reggio Emilia (RE) (IT)
(74) Representative: Grana, Daniele
(86) International application number: PCT/IB2016/055659
(87) International publication number: WO 2017/055974

(56) References cited:
- EP-A1- 2 113 410
- US-A1- 2012 235 626
- US-A1- 2013 119 932

## Description

### Technical Field

The present invention relates to an appliance for recharging batteries of electric vehicles or the like.

### Background Art

The use of appliances is known and common, generally integrated within an electric vehicle, adapted to enable the recharging of batteries of the vehicle itself.

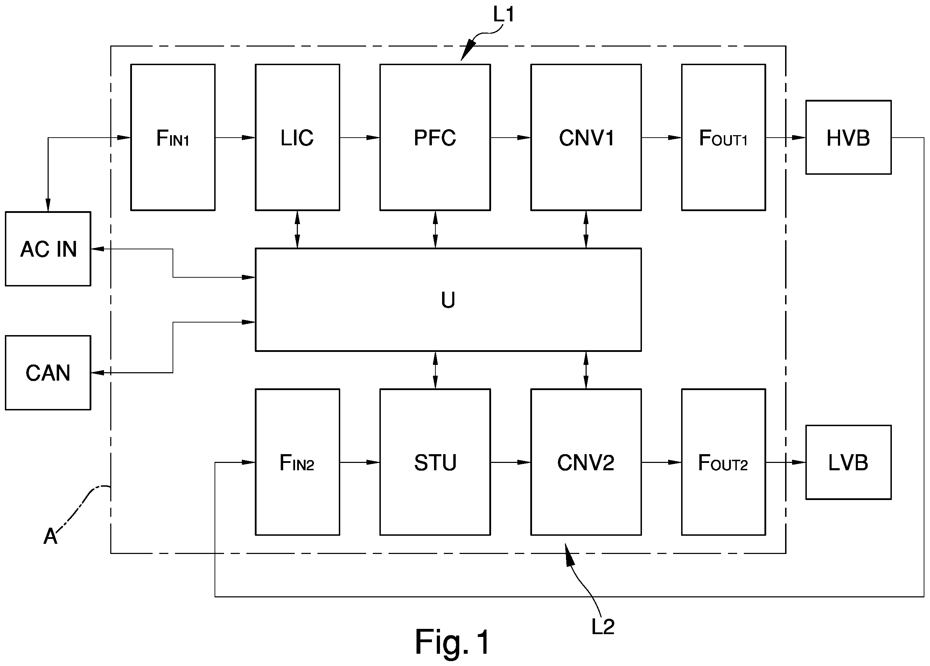

As illustrated in Figure 1, the appliances of known type comprise a battery charger, indicated with LI, connected at input to an alternating current power supply line AC IN and connected at output to a high-voltage electric battery HVB of the electric vehicle itself.

The battery charger L1 generally comprises a first input filter F_{IN1}, connectable to the alternating current power supply line AC IN, an inrush current limiter LIC, a power factor correction circuit PFC, a first converter CNV1 of the type of a DC/DC converter and a first output filter F_{OUT1} connected to the high-voltage battery HVB of the electric vehicle.

The battery charger L1 is therefore adapted to recharge the high-voltage electric battery HVB when the vehicle is stationary and connected to a power supply line AC IN.

Moreover, the appliances of known type comprise a DC/DC conversion line L2 connected at input to the high-voltage electric battery HVB and at output to a low-voltage electric battery LVB of the electric vehicle.

The DC/DC conversion line L2, besides being adapted to recharge the low-voltage electric battery LVB, is adapted to supply additional low-voltage user points.

In particular, the battery charger L1 and the DC/DC conversion line L2 are alternatively activatable for recharging the high-voltage electric battery HVB and the low-voltage electric battery LVB, respectively.

In more detail, the charge of the high-voltage electric battery HVB through the battery charger L1 takes place when the electric vehicle is stationary and is connected to the alternating current power supply line AC IN, while the charge of the low-voltage electric battery LVB and the supply of the additional low-voltage user points can occur both when the electric vehicle is stationary and when the electric vehicle is operating.

The DC/DC conversion line L2 comprises a second input filter F_{IN2} connected at input to the high-voltage electric battery HVB, a step-up converter STU (or boost converter) adapted to stabilize the voltage, a second converter CNV2 of the type of a DC/DC converter and a second output filter F_{OUT2} connected at input to the low-voltage electric battery LVB.

Furthermore, the appliances of known type generally comprise a control unit U operatively connected to the battery charger L1 and to the DC/DC conversion line L2 and operatively connectable to the central unit of the electric vehicle through the conventional CAN bus of the vehicle itself.

These known appliances are susceptible to improvements, in particular, the circuit structure that requires various electronic components is particularly complex.

Such circuit complexity, in fact, makes the appliance cumbersome and expensive both from the constructional point of view and from the point of view of the selling price of the appliance itself.

To get around these drawbacks, a known example of the appliance for recharging batteries of electric vehicles is shown in the patent document ITMO2013A000315 in which an appliance is described comprising AC/DC conversion means connectable at input to the alternating current power supply line and connected at output to the high-voltage electric battery and DC/DC conversion means connected at input to the high-voltage electric battery and connected at output to the low-voltage electric battery of the electric vehicle.

The AC/DC conversion means and the DC/DC conversion means are alternately operable for recharging the high-voltage electric battery and the low-voltage electric battery, respectively.

In particular, according to this known solution, the AC/DC conversion means and the DC/DC conversion means comprise a single, shared DC/DC converter, having an input alternatively connectable to the alternating current power supply line and to the high-voltage electric battery and having a first output connected to the high-voltage electric battery and a second output connected to the low-voltage electric battery.

The appliances of known type are susceptible to improvements regarding, in particular, the realization of electronic cards having a smaller number of components for the reduction of volumes, weights and related implementation costs.

In particular, the need is felt to reduce the dissipation of energy which takes place as a result of each conversion of the electric signals for the correct operation of the high- and low-voltage electric battery, thereby improving the performance and optimizing the charging times.

Moreover, such appliances are susceptible to improvements regarding the circuit implementation, so as to improve the functions related to the charging of the high-voltage electric battery and the low-voltage electric battery both during charging, when the electric vehicle engine is switched off, and during the motion of the electric vehicle itself.

Document US 2012/235626 A1 discloses battery charging apparatus including a converting unit, first and second charging units and a switching unit.

Document US 2013/119932 A1 discloses a battery charging apparatus including an input power processing unit configured to receive an AC power and convert the received AC power into an output voltage for power conversion and a hybrid power converting unit configured to use a common transformer to separately convert the output voltage of the input power processing unit into a first voltage and a second voltage for charging a high voltage battery and an auxiliary battery.

### Description of the Invention

The main aim of the present invention is to provide an appliance for recharging batteries of electric vehicles or the like which allows to reduce the dissipation of energy during the recharging operation and, at the same time, permits the simultaneous recharging of the high-voltage electric battery and low-voltage electric battery of the electric vehicle when the vehicle is stationary and connected to the alternating current power supply line.

One object of the present invention is to provide an appliance for recharging batteries of electric vehicles or the like which allows to reduce the costs of implementation and, consequently, the selling prices.

Another object of the present invention is to provide an appliance for recharging batteries of electric vehicles or the like having reduced overall dimensions and weight.

Another object of the present invention is to provide an appliance for recharging batteries of electric vehicles or the like which allows to overcome the mentioned drawbacks of the prior art within the ambit of a simple, rational, easy and which is effective to use as well as affordable solution.

The above mentioned objects are achieved by the present appliance for recharging batteries of electric vehicles or the like having the characteristics of claim 1.

### Brief Description of the Drawings

Other characteristics and advantages of the present invention will become better evident from the description of a preferred, but not exclusive, embodiment of an appliance for recharging batteries of electric vehicles or the like, illustrated by way of an indicative, but non-limiting example in the accompanying drawings in which:
Figure 1 is a general block diagram of an appliance of known type for recharging vehicle batteries;
Figure 2 is a general block diagram of an appliance according to the invention.

### Embodiments of the Invention

With particular reference to such illustrations, A globally indicates an appliance for recharging batteries of electric vehicles or the like.

The appliance A comprises conversion means connectable at input to an alternating current power supply line AC IN and connected at output to a high-voltage electric battery HVB and to a low-voltage electric battery LVB of an electric vehicle.

The conversion means are activatable for recharging the high-voltage electric battery HVB and the low-voltage electric battery LVB.

Preferably, the conversion means comprise at least an AC/DC converter for the conversion of the electric signal coming from the alternating current power supply line AC IN into direct current voltage suitable for the operation of the appliance A and for recharging the high-voltage electric battery HVB and low-voltage electric battery LVB.

According to the invention, the conversion means comprise:
- an input stage F_{IN}, LIC, PFC/STU alternatively connectable to the alternating current power supply line AC IN and to the high-voltage electric battery HVB;
- a first converter CNV1 having an input connected to the input stage F_{IN}, LIC, PFC/STU and an output connected to the high-voltage electric battery HVB;
- a second converter CNV2 having an input connected to the input stage F_{IN}, LIC, PFC/STU and an output connected to the low-voltage electric battery LVB.

Conveniently, the first converter CNV1 and the second converter CNV2 are activatable for the simultaneous recharging of the high-voltage electric battery HVB and the low-voltage electric battery LVB.

In this specification, by the term input stage is meant a set of electronic circuits suitable for the filtering, adaptation and stabilization of the electric input signal, by limiting and correcting the non-idealities contained in it.

The appliance A comprises at least a switch SW operable between a first configuration wherein the input stage F_{IN}, LIC, PFC/STU is connected to the alternating current power supply line AC IN, when the electric vehicle is stationary, and a second configuration wherein the input stage F_{IN}, LIC, PFC/STU is connected to the high-voltage electric battery HVB when the electric vehicle is in motion.

In more detail, in the first configuration the conversion means are adapted to the simultaneous recharge of the high-voltage electric battery HVB and of the low-voltage electric battery LVB, while in the second configuration, the conversion means are adapted to the recharge of the low-voltage electric battery LVB.

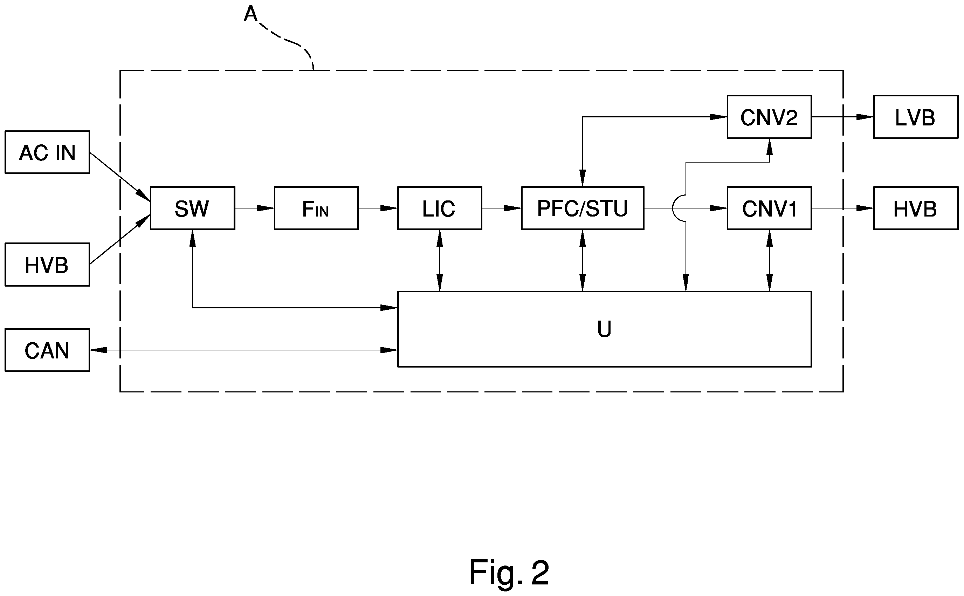

In the particular embodiment shown in Figure 2, the input stage F_{IN}, LIC, PFC/STU comprises a single input filter F_{IN} connected downstream of the switch SW.

In addition, the input stage F_{IN}, LIC, PFC/STU comprises a single inrush current limiter LIC connected downstream of the input filter F_{IN}.

Conveniently, the input stage F_{IN}, LIC, PFC/STU comprises a single correction and stabilization unit PFC/STU, connected downstream of the inrush current limiter LIC.

In more detail, the correction and stabilization unit PFC/STU is operable between a first mode, wherein it operates as a power factor correction circuit, and a second mode, wherein it operates as a step-up voltage converter and stabilizer.

In details, the correction and stabilization unit PFC/STU comprises a first output connected to the first converter CNV1 and a second output connected to the second converter CNV2.

It is also pointed out that the first and the second output of the correction and stabilization unit PFC/STU must provide a stabilized voltage, and possibly variable according to the output, to the first and second converter CNV1, CNV2 respectively, so that the first and second converter themselves are both employed under conditions of maximum efficiency.

Conveniently, the first and second converter CNV1, CNV2 are the type of DC/DC converters that receive a direct input voltage and produce a direct output voltage having a different level with respect to the input voltage.

Preferably, these DC/DC converters are selected from the group comprising resonant LLC converters and phase shift converters.

In more detail, the first converter CNV1 is of the resonant LLC type and the second converter CNV2 is of the phase shift type.

The use of different types of converter cannot however be ruled out.

In more detail, the first converter CNV1, the input voltage provided by the input stage F_{IN}, LIC, PFC/STU being equal, provides an output voltage for recharging the high-voltage electric battery HVB having a substantially different level with respect to the level of the output voltage provided by the converter CNV2 for recharging the low-voltage electric battery LVB.

These output voltages provided by the first and second converter CNV1, CNV2 have a level suitable to what the high-voltage electric battery HVB and the low-voltage electric battery LVB respectively require at input.

The appliance A comprises at least a control unit U connected to at least one of the switch SW, the inrush current limiter LIC, the correction and stabilization unit PFC/STU and the first and second converter CNV1, CNV2 for its operating management.

The control unit U is operatively connectable to a central unit of the electric vehicle through the conventional CAN bus, and is adapted to drive the appliance A for the simultaneous recharging of the high-voltage electric battery HVB and the low-voltage electric battery LVB and for the power supply of the low-voltage user points.

It has in practice been found that the described invention achieves the intended objects and in particular it is noted that through the conversion means so made it is possible to simultaneously recharge the high-voltage electric battery and the low-electric electric battery.

It is also stressed that the appliance so made allows reducing and minimizing the conversion losses and therefore ones, due to the recharging of the high-voltage electric battery and low-voltage electric battery, thereby improving the performance and charge life of the batteries themselves, in the event of the electric vehicle being stationary and the appliance being connected to the alternating current power supply line, and are therefore simultaneously recharged the high-voltage electric battery and the low-voltage electric battery.

Furthermore, the appliance so made has a small number of electronic components used to obtain the simultaneous recharge of the high-voltage electric battery and the low-voltage electric battery with a consequent reduction in weight, overall dimensions and selling prices.

## Claims

1. An appliance (A) for recharging batteries of electric vehicles, comprising conversion means connectable at input to an alternating current power supply line (AC IN) and connected at output to a high-voltage electric battery (HVB) and to a low-voltage electric battery (LVB) of an electric vehicle, said conversion means being activatable for recharging said high-voltage electric battery (HVB) and said low-voltage electric battery (LVB), wherein said conversion means comprise:
- at least an input stage (F_{IN}, LIC, PFC/STU) connectable alternatively to said alternating current power supply line (AC IN) and to said high-voltage electric battery (HVB);
- at least a first converter (CNV1) having an input connected to said input stage (F_{IN}, LIC, PFC/STU) and an output connected to said high-voltage electric battery (HVB);
- at least a second converter (CNV2) having an input connected to said input stage (F_{IN}, LIC, PFC/STU) and an output connected to said low-voltage electric battery;
said input stage (F_{IN}, LIC, PFC/STU) comprises a single correction and stabilization unit (PFC/STU), said correction and stabilization unit (PFC/STU) being operable between a first mode, wherein said correction and stabilization unit (PFC/STU) operates as a power factor correction circuit, and a second mode, wherein said correction and stabilization unit (PFC/STU) operates as a step-up converter, said correction and stabilization unit (PFC/STU) comprises a first output connected to said first converter (CNV1) and a second output connected to said second converter (CNV2), wherein said first and second converter (CNV1, CNV2) are configured for the simultaneous recharging of said high-voltage electric battery (HVB) and of said low-voltage electric battery (LVB), and said appliance (A) comprises at least a control unit (U) connected to said correction and stabilization unit (PFC/STU) and to said first and second converter (CNV1, CNV2), wherein said control unit (U) is operatively connected to a central unit of said electric vehicle and said control unit (U) is configured to drive said appliance (A) for the simultaneous recharging of said high-voltage electric battery (HVB) and said low-voltage electric battery (LVB) and for the power supply of the low-voltage user points.

2. The appliance (A) according to claim 1, **characterized in that** it comprises at least a switch (SW) operable between a first configuration wherein said input stage (F_{IN}, LIC, PFC/STU) is connected to said alternating current power supply line (AC IN), and a second configuration wherein said input stage (F_{IN}, LIC, PFC/STU) is connected to said high-voltage electric battery (HVB).

3. The appliance (A) according to one or more of the preceding claims, **characterized in that** said input stage (F_{IN}, LIC, PFC/STU) comprises a single input filter (F_{IN}).

4. The appliance (A) according to one or more of the preceding claims, **characterized in that** said input stage (F_{IN}, LIC, PFC/STU) comprises a single inrush current limiter (LIC).

5. The appliance (A) according to one or more of the preceding claims, **characterized in that** said first and second converter (CNV1, CNV2) are the type of DC/DC converters.

6. The appliance (A) according to one or more of the preceding claims, **characterized in that** said control unit (U) is connected to at least one of said switch (SW) and said inrush current limiter (LIC).

## Patentansprüche

1. Vorrichtung (A) zum Wiederaufladen von Batterien von Elektrofahrzeugen, mit einer Umwandlungseinrichtung, die am Eingang mit einer Wechselstrom-Versorgungsleitung (AC IN) verbindbar ist und am Ausgang mit einer elektrischen Hochspannungsbatterie (HVB) und mit einer elektrischen Niederspannungsbatterie (LVB) eines Elektrofahrzeugs verbunden ist, wobei die Umwandlungseinrichtung zum Wiederaufladen der elektrischen Hochspannungsbatterie (HVB) und der elektrischen Niederspannungsbatterie (LVB) aktivierbar ist, wobei die Umwandlungseinrichtung aufweist:
- mindestens eine Eingangsstufe (F_{IN}, LIC, PFC/STU), die alternativ an die Wechselstrom-Versorgungsleitung (AC IN) und an die elektrische Hochspannungsbatterie (HVB) anschließbar ist;
- mindestens einen ersten Wandler (CNV1) mit einem mit der Eingangsstufe (F_{IN}, LIC, PFC/STU) verbundenen Eingang und einem mit der elektrischen Hochspannungsbatterie (HVB) verbundenen Ausgang;
- mindestens einen zweiten Wandler (CNV2) mit einem Eingang, der mit der Eingangsstufe (F_{IN}, LIC, PFC/STU) verbunden ist, und einem Ausgang, der mit der elektrischen Niederspannungsbatterie verbunden ist;
die Eingangsstufe (F_{IN}, LIC, PFC/STU) eine einzige Korrektur- und Stabilisierungseinheit (PFC/STU) umfasst, wobei die Korrektur- und Stabilisierungseinheit (PFC/STU) zwischen einem ersten Modus, in dem die Korrektur- und Stabilisierungseinheit (PFC/STU) als eine Leistungsfaktorkorrekturschaltung arbeitet, und einem zweiten Modus, in dem die Korrektur- und Stabilisierungseinheit (PFC/STU) als ein Aufwärtswandler arbeitet, betreibbar ist,
die Korrektur- und Stabilisierungseinheit (PFC/STU) einen ersten Ausgang, der mit dem ersten Wandler (CNV1) verbunden ist, und einen zweiten Ausgang, der mit dem zweiten Wandler (CNV2) verbunden ist, umfasst, wobei der erste und der zweite Wandler (CNV1, CNV2) für das gleichzeitige Wiederaufladen der elektrischen Hochspannungsbatterie (HVB) und der elektrischen Niederspannungsbatterie (LVB) konfiguriert sind, und die Vorrichtung (A) mindestens eine Steuereinheit (U) umfasst, die mit der Korrektur- und Stabilisierungseinheit (PFC/STU) und mit dem ersten und zweiten Wandler (CNV1, CNV2) verbunden ist, wobei die Steuereinheit (U) operativ mit einer Zentraleinheit des Elektrofahrzeugs verbunden ist und die Steuereinheit (U) so konfiguriert ist, dass sie die Vorrichtung (A) für das gleichzeitige Wiederaufladen der elektrischen Hochspannungsbatterie (HVB) und der elektrischen Niederspannungsbatterie (LVB) und für die Stromversorgung der Niederspannungsverbraucherpunkte ansteuert.

2. Vorrichtung (A) nach Anspruch 1, **dadurch gekennzeichnet, dass** sie mindestens einen Schalter (SW) umfasst, der zwischen einer ersten Konfiguration, in der die Eingangsstufe (F_{IN}, LIC, PFC/STU) mit der Wechselstrom-Versorgungsleitung (AC IN) verbunden ist, und einer zweiten Konfiguration, in der die Eingangsstufe (F_{IN}, LIC, PFC/STU) mit der elektrischen Hochspannungsbatterie (HVB) verbunden ist, betätigt werden kann.

3. Vorrichtung (A) nach einem oder mehreren der vorhergehenden Ansprüche, **dadurch gekennzeichnet, dass** die Eingangsstufe (F_{IN}, LIC, PFC/STU) einen einzigen Eingangsfilter (F_{IN}) umfasst.

4. Vorrichtung (A) gemäß einem oder mehreren der vorhergehenden Ansprüche, **dadurch gekennzeichnet, dass** die Eingangsstufe (F_{IN}, LIC, PFC/STU) einen einzigen Einschaltstrombegrenzer (LIC) umfasst.

5. Vorrichtung (A) nach einem oder mehreren der vorhergehenden Ansprüche, **dadurch gekennzeichnet, dass** der erste und der zweite Wandler (CNV1, CNV2) vom Typ eines DC/DC-Wandlers sind.

6. Vorrichtung (A) nach einem oder mehreren der vorhergehenden Ansprüche, **dadurch gekennzeichnet, dass** die Steuereinheit (U) mit mindestens einem von dem Schalter (SW) und dem Einschaltstrombegrenzer (LIC) verbunden ist.

## Revendications

1. Appareil (A) pour recharger des batteries de véhicules électriques comprenant des moyens de conversion pouvant être connectés en entrée à une ligne d'alimentation électrique en courant alternatif (AC IN) et connectés en sortie à une batterie électrique haute tension (HVB) et à une batterie électrique basse tension (LVB) d'un véhicule électrique, lesdits moyens de conversion pouvant être activés pour recharger ladite batterie électrique haute tension (HVB) et ladite batterie électrique basse tension (LVB),
dans lequel lesdits moyens de conversion comprennent :
- au moins un étage d'entrée (F_{IN}, LIC, PFC/STU) pouvant être connecté alternativement à ladite ligne d'alimentation électrique en courant alternatif (AC IN) et à ladite batterie électrique haute tension (HVB) ;
- au moins un premier convertisseur (CNV1) ayant une entrée connectée audit étage d'entrée (F_{IN}, LIC, PFC/STU) et une sortie connectée à ladite batterie électrique haute tension (HVB) ;
- au moins un deuxième convertisseur (CNV2) ayant une entrée connectée audit étage d'entrée (F_{IN}, LIC, PFC/STU) et une sortie connectée à ladite batterie électrique basse tension ;
ledit étage d'entrée (F_{IN}, LIC, PFC/STU) comprend une seule unité de correction et de stabilisation (PFC/STU), ladite unité de correction et de stabilisation (PFC/STU) pouvant fonctionner entre un premier mode, dans lequel ladite unité de correction et de stabilisation (PFC/STU) fonctionne comme un circuit de correction de facteur de puissance, et un deuxième mode, dans lequel ladite unité de correction et de stabilisation (PFC/STU) fonctionne comme un convertisseur élévateur,
ladite unité de correction et de stabilisation (PFC/STU) comprend une première sortie connectée audit premier convertisseur (CNV1) et une deuxième sortie connectée audit deuxième convertisseur (CNV2), dans lequel lesdits premier et deuxième convertisseurs (CNV1, CNV2) sont configurés pour la recharge simultanée de ladite batterie électrique haute tension (HVB) et de ladite batterie électrique basse tension (LVB), et
ledit appareil (A) comprend au moins une unité de commande (U) connectée à ladite unité de correction et de stabilisation (PFC/STU) et auxdits premier et deuxième convertisseurs (CNV1, CNV2), dans lequel ladite unité de commande (U) est connectée de manière fonctionnelle à une unité centrale dudit véhicule électrique et ladite unité de commande (U) est configurée pour entraîner ledit appareil (A) pour la recharge simultanée de ladite batterie électrique haute tension (HVB) et ladite batterie électrique basse tension (LVB) et pour l'alimentation électrique des points d'utilisateur basse tension.

2. Appareil (A) selon la revendication 1, **caractérisé en ce qu'**il comprend au moins un commutateur (SW) pouvant fonctionner entre une première configuration dans laquelle ledit étage d'entrée (F_{IN}, LIC, PFC/STU) est connecté à ladite ligne d'alimentation électrique en courant alternatif (AC IN), et une deuxième configuration dans laquelle ledit étage d'entrée (F_{IN}, LIC, PFC/STU) est connecté à ladite batterie électrique haute tension (HVB).

3. Appareil (A) selon une ou plusieurs des revendications précédentes, **caractérisé en ce que** ledit étage d'entrée (F_{IN}, LIC, PFC/STU) comprend un seul filtre d'entrée (F_{IN}).

4. Appareil (A) selon une ou plusieurs des revendications précédentes, **caractérisé en ce que** ledit étage d'entrée (F_{IN}, LIC, PFC/STU) comprend un seul limiteur de courant d'appel (LIC).

5. Appareil (A) selon une ou plusieurs des revendications précédentes, **caractérisé en ce que** lesdits premier et deuxième convertisseurs (CNV1, CNV2) sont du type de convertisseurs CC/CC.

6. Appareil (A) selon une ou plusieurs des revendications précédentes, **caractérisé en ce que** ladite unité de commande (U) est connectée à au moins un parmi ledit commutateur (SW) et ledit limiteur de courant d'appel (LIC).
